# DEMANDE DE BREVET EUROPEEN

(11) **EP 2 720 175 A1**
(43) Date de publication de la demande: **16.04.2014**
(21) Numéro de dépôt: 12306234.1
(22) Date de dépôt: 09.10.2012
(51) Int. Cl.: G06K 19/077

(54) **Module électronique, dispositif à module électronique et procédé de fabrication.**

(71) Demandeur: Gemalto SA, 92190 Meudon (FR)
(72) Inventeur: Dossetto, Lucile, 92190 Meudon (FR); Robertet, Laurence, 92190 Meudon (FR); Degeilh, Line, 92190 Meudon (FR)
(74) Mandataire: Cour, Pierre

(57) **Abrégé**

La présente invention concerne notamment un module électronique 1 comportant un film support diélectrique 3 présentant sur une de ses faces une zone de contact électrique 5 métallisée et constituée d'une pluralité de surfaces de contact C1 à C8 isolées électriquement les unes des autres au moyen de chemins d'isolation 13, lesdites surfaces de contact C1 à C8 étant destinées à venir en contact avec un lecteur électronique. Le film support diélectrique 3 comporte, sur la face opposée à celle présentant une zone de contact électrique 5, une puce électronique 7 reliée auxdites surfaces de contact C1 à C8. La face du film support diélectrique 3, présentant la zone de contact électrique 5, comporte au moins une portion 15 mettant à nue le film support diélectrique 3 pour définir une zone de personnalisation graphique 17.

## Description

La présente invention se rapporte aux domaines techniques des modules électroniques, aux procédés de fabrication d'un module électronique, ainsi qu'aux dispositifs électroniques, en particulier aux cartes à puces, comportant au moins un module électronique.

De façon générale, les modules électroniques sont formés par un film support diélectrique sur lequel est appliquée une couche métallisée. Sur la face opposée à la couche métallisée est collée une puce électronique connectée à différentes zones de la couche métallisée.

Dans un dispositif électronique tel qu'une carte à puce, le module électronique est collé dans une cavité prévue à cet effet dans le corps de carte.

Les clients utilisant et commandant de tels dispositifs électroniques ont de plus en plus une exigence de personnalisation dudit dispositif électronique ainsi que du module électronique lui-même, afin de se démarquer de la concurrence.

Pour cela, une solution connue est de fournir un module électronique adapté et de dimension spécifiquement pour le client afin d'obtenir une forme particulière sur les contacts. Cela permet de représenter un logo ou une marque sur le module, de manière fiable. Cependant, ce genre de module électronique personnalisé impose l'utilisation de composants spécifiques dés le début de la chaine de production, ce qui entraine des coûts de production supplémentaires.

Une autre solution connue est de personnaliser les contacts du module par gravure laser. Une telle solution ne permet pas d'avoir de motif fortement contrasté. De plus, ce traitement par laser accélère l'érosion des plages de contact et il diminue la tenue dans le temps des modules.

Un des buts de l'invention est de résoudre au moins partiellement les inconvénients de l'art antérieur et de proposer un module électronique personnalisable dont les coûts de production sont réduits.

Ainsi, la présente invention concerne un module électronique comportant un film support diélectrique présentant sur une de ses faces une zone de contact électrique métallisée et constituée d'une pluralité de surfaces de contact isolées électriquement les unes des autres au moyen de chemins d'isolation, lesdites surfaces de contact étant destinées à venir en contact avec un lecteur électronique. Le film support diélectrique comporte, sur la face opposée à celle présentant une zone de contact électrique, une puce électronique reliée auxdites surfaces de contact. La face du film support diélectrique, présentant la zone de contact électrique, comporte au moins une portion mettant à nue le film support diélectrique pour définir une zone de personnalisation graphique.

Cela permet de réaliser une personnalisation graphique sur le module électronique pour un coût réduit car ladite personnalisation peut être réalisée par des moyens classiques d'impression ou de collage réalisable à tout moment lors de la fabrication de la carte à puce.

La au moins une portion mettant à nue le film support diélectrique peut être réalisée sur une portion de la zone de contact électrique n'intervenant pas dans la relation et le dialogue entre le lecteur électronique et la puce électronique. La au moins une portion mettant à nue le film support diélectrique peut être réalisée sur une surface située en dehors des plages de contact.

Préférentiellement, les surfaces de contact peuvent être définies par la norme ISO/IEC 7816 et la au moins une portion mettant à nue le film support diélectrique peut être réalisée sur la surface de contact classiquement utilisée pour la programmation des cartes à mémoire morte.

Egalement, les surfaces de contact peuvent définis par la norme ISO/IEC 7816 et la au moins une portion mettant à nue le film support diélectrique peut être réalisée sur une surface de contact correspondant à une surface de contact réservée pour un usage futur.

L'invention concerne également un dispositif électronique comportant au moins un module électronique comportant un film support diélectrique présentant sur une de ses faces une zone de contact électrique métallisée et constituée d'une pluralité de surfaces de contact isolées électriquement les unes des autres au moyen de chemins d'isolation, lesdites surfaces de contact étant destinées à venir en contact avec un lecteur électronique. Le film support diélectrique comporte, sur la face opposée à celle présentant une zone de contact électrique, une puce électronique reliée auxdites surfaces de contact. La face du film support diélectrique, présentant la zone de contact électrique, comporte au moins une portion mettant à nue le film support diélectrique pour définir une zone de personnalisation graphique.

Selon un aspect du dispositif selon l'invention, ledit dispositif est une carte à puce.

L'invention concerne également un procédé de fabrication d'un module électronique comportant un film support diélectrique présentant sur une de ses faces une zone de contact électrique métallisée et constituée d'une pluralité de surfaces de contact isolées électriquement les unes des autres au moyen de chemins d'isolation, lesdites surfaces de contact étant destinées à venir en contact avec un lecteur électronique. Le film support diélectrique comporte, sur la face opposée à celle présentant une zone de contact électrique, une puce électronique reliée auxdites surfaces de contact. Ledit procédé comprend une étape de réalisation d'au moins une portion mettant à nue le film support diélectrique dans la zone de contact électrique.

Le procédé de fabrication du module électronique sécurisé peut comporter une étape de personnalisation graphique sur ladite au moins une portion mettant à nue le film support diélectrique. L'étape de personnalisation graphique peut être réalisée par impression d'un motif sur la portion mettant à nue le film support diélectrique. L'étape de personnalisation graphique est réalisée par application d'un élément pré-imprimé sur la portion mettant à nue le film support diélectrique.

Préférentiellement, l'étape de réalisation d'au moins une portion mettant à nue le film support diélectrique est réalisée lors de la formation des chemins d'isolation.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente un schéma simplifié d'un exemple de dispositif électronique, en vue de dessus,
- la figure 2 représente un schéma simplifié d'un exemple de module électronique, en vue de coupe longitudinale,
- la figure 3 représente un schéma simplifié d'un exemple de module électronique classique, en vue de dessus,
- la figure 4 représente un schéma simplifié d'un exemple de module électronique, en vue de dessus, selon un premier mode de réalisation,
- la figure 5 représente un schéma simplifié d'un exemple de module électronique, en vue de dessus, selon un second mode de réalisation,
- la figure 6 représente un schéma simplifié d'un exemple de module électronique, en vue de dessus, selon un troisième mode de réalisation.

Les éléments identiques sur toutes les figures sont indiqués par les mêmes numéros de références.

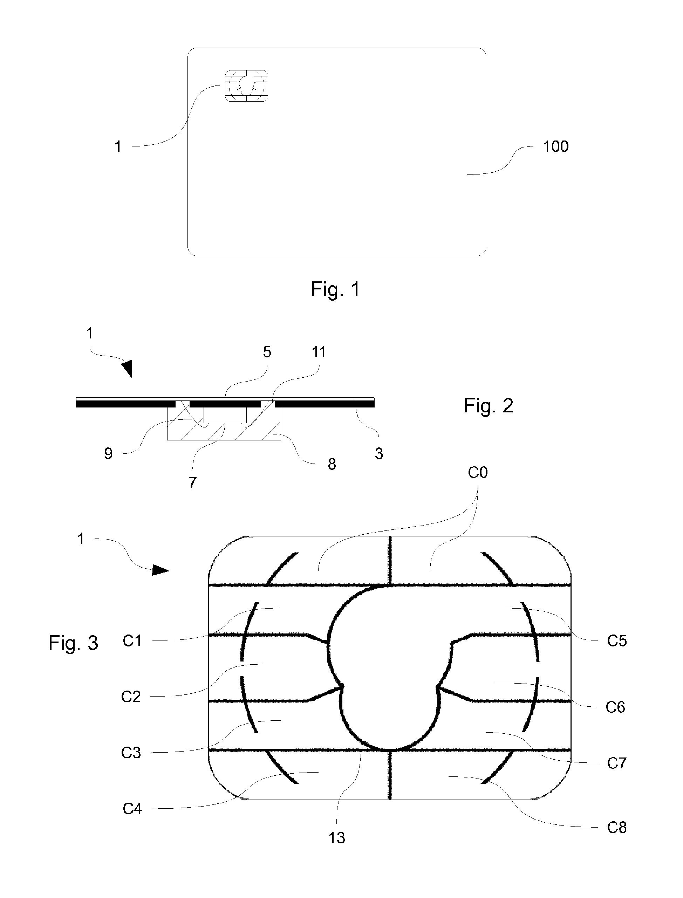

La figure 1 représente un schéma simplifié d'un exemple de dispositif électronique 100, ici une carte à puce au format carte bancaire, en vue de dessus, dans lequel a été mis en place un module électronique 1 selon l'invention. Le dispositif électronique 100 peut également être d'un autre format comme par exemple le format 2FF (acronyme de l'anglais « second form factor »), 3FF (acronyme de l'anglais « third form factor ») ou encore 4FF (acronyme de l'anglais « fourth form factor ») pour des cartes d'identification d'utilisateur appelées cartes SIM (acronyme de l'anglais « subscriber identity module »).
Les figures 2 et 3 montrent plus en détail la structure d'un module électronique 1 classique. Comme le montre la figure 2 en vue de coupe, on y retrouve un film support diélectrique 3 sur lequel est présent, sur une de ses faces, une zone de contact électrique 5 métallisée, par exemple en cuivre. Une puce électronique 7 est fixée sur le film support 3 sur la face opposée à celle comportant la zone de contact électrique 5. La puce électronique 7 est reliée à la zone de contact électrique 5 par des connectiques 9 passant au travers du film support 3 par des orifices 11. La puce électronique 7 ainsi que ses connectiques 9 peuvent être recouvertes d'une capsule de résine 8 protectrice.

Chaque connectique 9 de la puce électronique 7 est reliée à la zone de contact électrique 5 métallisée au niveau de surfaces de contact C1 à C8 et isolées électriquement les unes des autres par des chemins d'isolation 13 dont la métallisation a été retirée, comme montré sur la figure 3 en vue de dessus. Lesdites surfaces de contact C1 à C8 sont destinées à venir en contact avec un lecteur électronique et permettent le dialogue et l'échange de données et d'informations entre la puce électronique 7 et ledit lecteur électronique. La zone de contact électrique 5 peut également comporter une ou plusieurs surfaces C0 non liées électriquement à la puce électronique 7 car non reliées à ladite puce électronique 7 par des connectiques 9.

La disposition et le rôle des surfaces de contact C1 à C8 sont codifiés par la norme ISO/IEC 7816-2. Cette norme introduit huit surfaces de contact ainsi que leur utilisation et leur positionnement:
- C1 : pour l'alimentation en tension continue, abréviation normée Vcc,
- C2 : pour la remise à zéro de la puce électronique, abréviation normée RST,
- C3 : pour l'horloge, abréviation normée CLK,
- C4 : réservée pour un usage futur, abréviation normée RFU,
- C5 : pour la masse, abréviation normée GND,
- C6 : pour la programmation des cartes à mémoire morte (EPROM), n'est plus utilisé, abréviation normée Vpp,
- C7 : pour l'entrée et la sortie de données, abréviation normée I/O,
- C8 : réservée pour un usage futur, abréviation normée RFU.

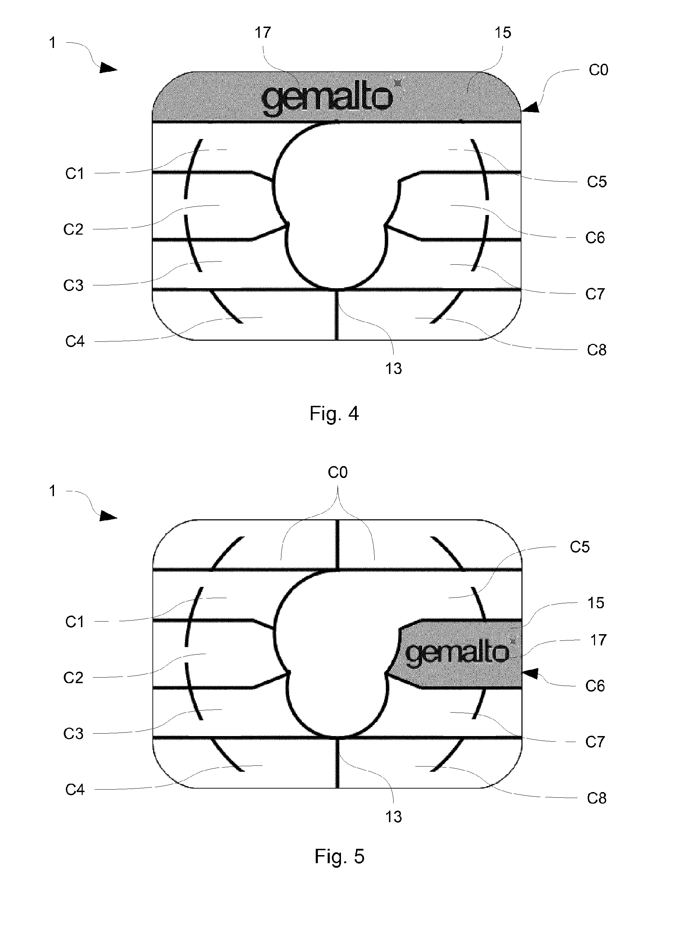

Comme illustré par les figures 4 à 6, la face du film support diélectrique 3 présentant la zone de contact électrique 5 peut comporter au moins une portion 15 mettant à nue le film support diélectrique 3. Ladite au moins une portion 15 est de préférence réalisée sur une portion de la zone de contact électrique 5 n'intervenant pas dans la relation et le dialogue entre le lecteur électronique et la puce électronique 7.

Ainsi, le module électronique 1 de la figure 2 est transformé afin de comporter une portion 15 mettant à nue le film support diélectrique 3, réalisée sur une portion de la zone de contact électrique 5 n'intervenant pas dans la relation et le dialogue entre le lecteur électronique et la puce électronique 7, mais il peut également comporter plusieurs portions 15 réalisées sur plusieurs portions distinctes de la zone de contact électrique 5 n'intervenant pas dans la relation et le dialogue entre le lecteur électronique et la puce électronique 7.

La présence d'au moins une portion 15 mettant à nue le film support diélectrique 3 permet au module électronique 1 de présenter une personnalisation graphique au niveau de ladite portion 15 et ainsi permet de définir une zone de personnalisation graphique 17. En effet, le fait que le film support diélectrique 3 soit à nue sur cette au moins une portion 15, permet d'imprimer ou de coller un logo ou encore une dénomination. Cela peut être effectué pour un coût réduit car ladite personnalisation graphique 17 peut être réalisée par des moyens classiques d'impression ou de collage et sans utilisation d'encres spécifiques ou de colles spécifiques pouvant adhérer au métal. De plus, cela est particulièrement avantageux pour les cartes SI M de type 3FF et 4FF où l'espace disponible sur le corps de dispositif est particulièrement réduit et ne permet pas ou difficilement une personnalisation graphique 17. Bien entendu, cette zone de personnalisation graphique 17 est d'une taille suffisante pour pouvoir contenir un motif visible correspondant à un logo ou une marque.

La figure 4 montre un premier mode de réalisation de l'invention. Dans ce premier mode de réalisation, la portion 15 mettant à nue le film support diélectrique 3 et la personnalisation graphique 17 sont réalisées sur une surface C0 qui n'est pas liée électriquement à la puce électronique 7 et donc où l'absence de métal sur le film support diélectrique 3 n'entraine pas de conséquence sur le bon fonctionnement du module électronique 1. Sur l'exemple présenté par la figure 4, le module électronique 1 présente une seule surface C0 qui n'est pas liée électriquement à la puce électronique 7, située à la périphérie dudit module électronique 1. Cependant, on peut tout à fait, sans sortir du cadre de l'invention, imaginer que le module électronique 1 comporte une ou plusieurs surfaces C0 située en dehors des plages de contact C1 à C8 telles que définies dans la norme ISO/IEC 7816-2. Ladite surface C0 peut aussi se trouver au centre du module lorsque celui-ci n'est pas relié à la masse C5.

La figure 5 montre un second mode de réalisation de l'invention dans lequel la portion 15 mettant à nue le film support diélectrique 3 ainsi que la personnalisation graphique 17 sont réalisées sur la surface de contact C6, classiquement utilisée pour la programmation des cartes à mémoire morte selon la norme ISO/IEC 7816-2. Ce mode de réalisation n'est possible que dans le cas où ce contact C6 n'est pas utilisé pour une interface vers un module sans contact qui permet l'accès à des services de type communication en champs proche (NFC) tel que définie dans les standards TS 102.613 (SWP) et TS 102.622 (HCl). Cet emplacement sera l'emplacement préféré pour les modules ne disposant que de six contacts C1 à C3 et C5 à C7 et dont la taille est strictement limitée aux six contacts.

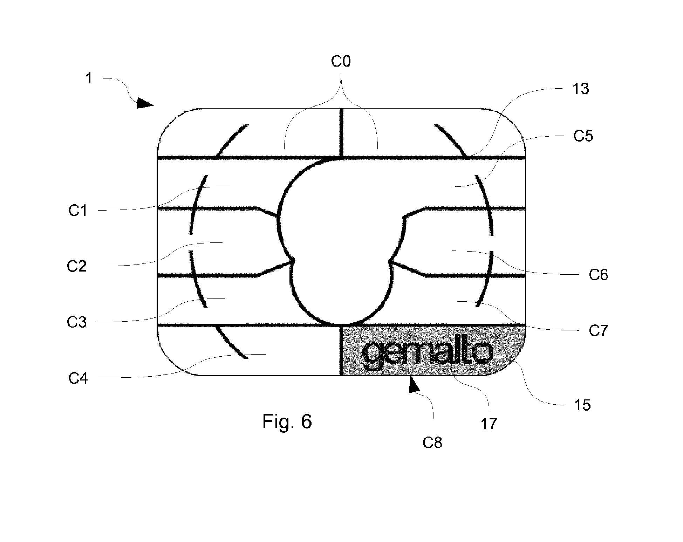

La figure 6 montre un troisième mode de réalisation de l'invention dans lequel la portion 15 mettant à nue le film support diélectrique 3 ainsi que la personnalisation graphique 17 sont réalisées sur la surface de contact C8, correspondant à une surface de contact réservée pour un usage futur selon la norme ISO/IEC 7816-2. La portion 15 mettant à nue le film support diélectrique 3 ainsi que la personnalisation graphique 17 peuvent également être réalisées sur la surface de contact C4, correspondant également à une surface de contact réservée pour un usage futur ou encore sur les deux surfaces de contact C4 et C8 en même temps puisque selon la norme ISO/IEC 7816-2, elles sont contigües. Ce mode de réalisation n'est possible que dans le cas où ces contacts C4 et C8 ne sont pas utilisés pour l'utilisation et la liaison avec une interface de type USB (acronyme de l'anglais « universal serial bus ») comme défini par le standard ETSI TS 102.600.

La présente invention concerne également un procédé de fabrication d'un module électronique 1 dont la face du film support diélectrique 3, comportant la zone de contact électrique 5, comporte au moins une portion 15 mettant à nue le film support diélectrique 3 pour définir une zone de personnalisation graphique 17.

Afin d'y parvenir, ledit procédé de fabrication d'un module électronique 1 comprend une étape de réalisation d'au moins une portion 15 mettant à nue le film support diélectrique 3 dans la zone de contact électrique 5 et une étape d'application d'une personnalisation graphique 17 sur ladite au moins une portion 15 mettant à nu le film support diélectrique 3. De préférence, et afin de limiter les coûts de production, cette étape est réalisée lors de la formation des chemins d'isolation 13 sur la zone de contact électrique 5 et peut être obtenue par exemple par gravure chimique ou découpe mécanique de la zone de contact électrique 5.

L'étape de personnalisation graphique 17 du module électronique 1 peut quand à elle être effectuée n'importe quand après l'étape de réalisation de la au moins une portion 15 mettant à nu le film support diélectrique 3. Notamment, il devient possible de personnaliser le module pendant l'étape de personnalisation graphique 17 du module électronique 1 lors de la personnalisation graphique du dispositif électronique 100, ce qui permet de mutualiser les moyens de personnalisation et donc de diminuer les coûts de production. Ce type de personnalisation peut être réalisé par des moyens d'impression connus de l'homme du métier, par exemple par impression offset, jet d'encre, tampographie ou encore impression laser.

Une variante de personnalisation graphique 17 du module peut aussi se faire en sortie de chaine de fabrication par l'application d'un élément pré-imprimé tel que, par exemple par collage d'une étiquette dans la portion 15 mise à nu du film support.

Ainsi, on voit bien que le module électronique 1 selon l'invention ainsi que son procédé de fabrication, permet une personnalisation graphique 17 dudit module électronique 1 pour un coût réduit.

La présente invention a été décrite pour un module disposant d'un film support de type simple face, c'est-à-dire métallisé uniquement du côté des plages contacts. Il va de soi que l'invention est également applicable à d'autre type de film support, notamment double face, disposant d'un dépôt métallique gravé sur chacune de ses faces. Les connectiques traversant le film support peuvent alors être remplacés par des via réalisant un contact électrique entre les plages de contact d'une part et les motifs gravés sur l'autre face. L'invention ne se fera que sur le côté des plages de contact où une portion du le film support est mis à nu comme précédemment indiqué.

## Revendications

1. Module électronique (1) comportant un film support diélectrique (3) présentant sur une de ses faces une zone de contact électrique (5) métallisée et constituée d'une pluralité de surfaces de contact (C1 à C8) isolées électriquement les unes des autres au moyen de chemins d'isolation (13), lesdites surfaces de contact (C1 à C8) étant destinées à venir en contact avec un lecteur électronique, le film support diélectrique (3) comportant, sur la face opposée à celle présentant une zone de contact électrique (5), une puce électronique (7) reliée auxdites surfaces de contact (C1 à C8), **caractérisé en ce que** la face du film support diélectrique (3) présentant la zone de contact électrique (5), comporte au moins une portion (15) mettant à nue le film support diélectrique (3) pour définir une zone de personnalisation graphique (17).

2. Module électronique (1) selon la revendication 1, dans lequel ladite au moins une portion (15) mettant à nue le film support diélectrique (3) est réalisée sur une portion de la zone de contact électrique (5) n'intervenant pas dans la relation et le dialogue entre le lecteur électronique et la puce électronique (7).

3. Module électronique (1) selon la revendication 1, dans lequel ladite au moins une portion (15) mettant à nue le film support diélectrique (3) est réalisée sur une surface (C0) située en dehors des plages de contact.

4. Module électronique (1) selon la revendication 2, dans lequel les surfaces de contact (C1 à C8) sont définies par la norme ISO/IEC 7816 et la au moins une portion (15) mettant à nue le film support diélectrique (3) est réalisée sur la surface de contact (C6) classiquement utilisée pour la programmation des cartes à mémoire morte.

5. Module électronique (1) selon la revendication 2, dans lequel les surfaces de contact (C1 à C8) sont définis par la norme ISO/IEC 7816 et la au moins une portion (15) mettant à nue le film support diélectrique (3) est réalisée sur une surface de contact (C4 ou C8) correspondant à une surface de contact réservée pour un usage futur.

6. Dispositif électronique (100) comportant au moins un module électronique (1) comportant un film support diélectrique (3) présentant sur une de ses faces une zone de contact électrique (5) métallisée et constituée d'une pluralité de surfaces de contact (C1 à C8) isolées électriquement les unes des autres au moyen de chemins d'isolation (13), lesdites surfaces de contact (C1 à C8) étant destinées à venir en contact avec un lecteur électronique, le film support diélectrique (3) comportant, sur la face opposée à celle présentant une zone de contact électrique (5), une puce électronique (7) reliée auxdites surfaces de contact (C1 à C8), **caractérisé en ce que** la face du film support diélectrique (3) présentant la zone de contact électrique (5), comporte au moins une portion (15) mettant à nue le film support diélectrique (3) pour définir une zone de personnalisation graphique (17).

7. Dispositif électronique selon la revendication 6, dans lequel ledit dispositif est une carte à puce (100).

8. Procédé de fabrication d'un module électronique (1) comportant un film support diélectrique (3) présentant sur une de ses faces une zone de contact électrique (5) métallisée et constituée d'une pluralité de surfaces de contact (C1 à C8) isolées électriquement les unes des autres au moyen de chemins d'isolation (13), lesdites surfaces de contact (C1 à C8) étant destinées à venir en contact avec un lecteur électronique, le film support diélectrique (3) comportant, sur la face opposée à celle présentant une zone de contact électrique (5), une puce électronique (7) reliée auxdites surfaces de contact (C1 à C8), **caractérisé en ce que** ledit procédé comprend une étape de réalisation d'au moins une portion (15) mettant à nue le film support diélectrique (3) dans la zone de contact électrique (5).

9. Procédé de fabrication d'un module électronique sécurisé (1) selon la revendication 8, lequel comporte une étape de personnalisation graphique (17) sur ladite au moins une portion (15) mettant à nue le film support diélectrique (3).

10. Procédé de fabrication d'un module électronique sécurisé (1) selon la revendication 9, dans lequel l'étape de personnalisation graphique (17) est réalisée par impression d'un motif sur la portion (15) mettant à nue le film support diélectrique (3).

11. Procédé de fabrication d'un module électronique sécurisé (1) selon la revendication 9, dans lequel l'étape de personnalisation graphique (17) est réalisée par application d'un élément pré-imprimé sur la portion (15) mettant à nue le film support diélectrique (3).

12. Procédé de fabrication d'un module électronique sécurisé (1) selon la revendication 8, dans lequel l'étape de réalisation d'au moins une portion (15) mettant à nue le film support diélectrique (3) est réalisée lors de la formation des chemins d'isolation (13).
